# EUROPEAN PATENT SPECIFICATION

(11) **EP 3 707 447 B1**
(45) Date of publication and mention of the grant of the patent: **25.01.2023**
(21) Application number: 18795340.1
(22) Date of filing: 19.10.2018
(51) Int. Cl.: F25D 23/12, A23L 5/30, F25D 11/02

(54) **A REFRIGERATOR EXTENDING THE SHELF-LIFE OF THE FOOD PRODUCTS PLACED THEREIN**
KÜHLSCHRANK, DER DIE HALTBARKEIT DER DARIN AUFBEWAHRTEN LEBENSMITTEL VERLÄNGERT
RÉFRIGÉRATEUR PROLONGEANT LA DURÉE DE CONSERVATION DES PRODUITS ALIMENTAIRES PLACÉS EN LUI

(30) Priority: 06.11.2017 TR 201717333
(43) Date of publication of application: 16.09.2020
(73) Proprietor: Arçelik Anonim Sirketi, 34445 Istanbul (TR)
(72) Inventor: AKINCI, Irem, 34950 Istanbul (TR); ERCAN, Veysi, 34950 Istanbul (TR); AKSIN, Yasin, 34950 Istanbul (TR)
(86) International application number: PCT/EP2018/078671
(87) International publication number: WO 2019/086269

(56) References cited:
- ES-A1- 2 548 458
- JP-A- H07 203 838
- KR-A- 20020 016 672
- KR-A- 20110 057 770
- KR-A- 20120 096 649
- KR-A- 20130 070 972

## Description

### TECHNICAL FIELD

The present invention relates to a refrigerator, in particular to a refrigerator extending the shelf-life of the food products placed therein.

### PRIOR ART

Refrigerators are appliances enabling particularly food products to be stored for a long time without being spoiled. Microorganisms such as bacteria or fungus, can rapidly reproduce particularly on food products, causing them to become spoiled. In general, compared to cold environments, said microorganisms act and reproduce faster in warm environments. Therefore, the food products stored in warm environments tend to spoil faster than those stored in cold environments. Thanks to keeping the food products in a cold environment in a chamber, refrigerators slow down the vital activities of microorganisms, thereby delaying spoilage of said food products.

Food products such as red meat or fish spoil more rapidly compared to other food products due to their natural microflora and high enzymatic activities. Therefore, these products have shorter shelf-lives even when they are stored in a refrigerator by the consumers. Consuming such products when they are spoiled may lead to intoxication or more severe problems with fatal consequences.

The activities of the microflora and the enzymes slow down but do not completely stop in cold. Therefore, cold storage may extend but cannot halt spoilage of food products. The microorganisms initially present of the food products continue reproducing during storage, causing spoilage.

Therefore, a structure is needed which decelerates the microbiological development on food products during storage.

State of the art Japanese patent document no.JP2003121050 mentions a refrigerator in which introduction of mold and fungi therein is inhibited by using electrolyzed water. Electrolyzed water is atomized by using ultrasonic waves. KR 2013 0070972 A discloses a refrigerator according to the preamble of claim 1.

None of the state of the art documents include a solution such as the one in the present invention.

### BRIEF DESCRIPTION OF THE INVENTION

The aim of the present invention is to realize a refrigerator extending the shelf-life of the food products placed therein.

Another aim of the present invention is to realize a refrigerator decelerating the activity of the microorganisms on food products by means of ultrasonic waves.

### DETAILED DESCRIPTION OF THE INVENTION

The refrigerator realized to achieve the aims of the present invention is illustrated in the accompanying drawings, wherein:

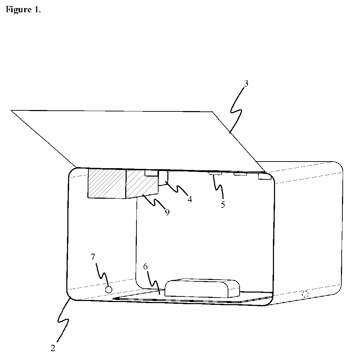

Figure 1: is a view of the interior of the refrigerator in an embodiment of the invention.

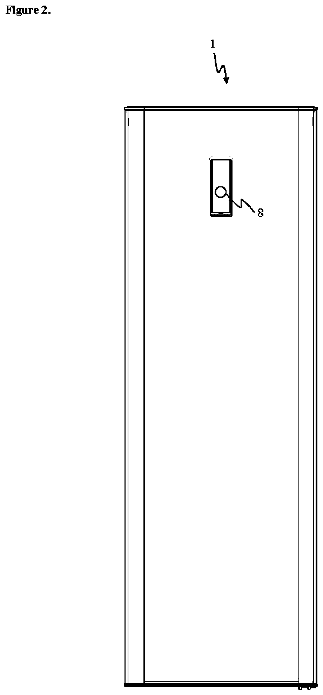

Figure 2: is a view of the exterior of the refrigerator in an embodiment of the invention.

The elements in the figures are numbered individually and the correspondence of these numbers are given hereinafter.
1. Refrigerator
2. Inner chamber
3. Door
4. Generator
5. Transducer
6. Plate
7. Microphone
8. Button
9. Control unit

In its most basic form, the refrigerator (1) extending the shelf-life of the food products placed therein, comprises
- at least one inner chamber (2) in which the items intended to be stored are placed,
- at least one door (3) enabling closing the inner chamber (2),
- at least one generator (4) creating the electric signal to enable generation of the ultrasonic wave intended to be transmitted to the inner chamber (2),
- at least one transducer (5) converting the electric signals generated by the generator (4) to ultrasonic waves.

In its most basic form, the refrigerator (1) extending the shelf-life of the food products placed therein, comprises at least one inner chamber (2) in which the items intended to be stored are placed, and at least one door (3) enabling closing the inner chamber (2). The electric signal corresponding to the ultrasonic wave intended to be transmitted to the inner chamber (2), is generated by means of a generator (4). The generator (4) generates an electric signal according to the frequency, power and duration of the ultrasonic wave desired to be generated. Said electric signal is converted to ultrasonic waves by a transducer (5). The transducer (5) can be placed in any manner enabling transmitting the ultrasonic waves to the inner chamber (2). The generator (4) may be an analog or a digital generator.

According to the invention, the refrigerator (1) comprises at least one microphone (7) detecting ultrasonic waves and thus enabling measuring the amount of the ultrasonic waves transmitted to the inner chamber (2). By this, the amount of the ultrasonic waves desired to be generated by the generator (4) can be compared with the amount of the ultrasonic waves transmitted to the inner chamber (2).

In an embodiment of the invention, the refrigerator (1) of the invention comprises at least one button (8) enabling a user to start and stop generation of the ultrasonic waves. Said button (8) may start and/or stop the operation of the generator (4). Connection of the button (8) to the generator (4) may be analog or digital.

In an embodiment of the invention, the button (8) activates a timer upon being pressed by a user. In this embodiment, the generator (4) is connected to said timer. Thus, the generator (4) is activated for a given duration upon pressing the button (8), and is then stopped.

In an embodiment of the invention, the refrigerator (1) of the invention comprises at least one control unit (9) capable of determining the frequency, amplitude and the waveform of the electric signal to be generated by the generator (4), of controlling starting and stopping the operation of the generator (4), of determining the amount of ultrasonic waves detected by the microphone (7) by receiving data from the microphone (7), of comparing this amount with the amount of ultrasonic waves generated by means of the electric signal generated by the generator (4), of deciding whether to continue or to stop generation of ultrasonic waves depending on said comparison, of detecting the button (8) being pressed by a user, and accordingly starting or stopping the operation of the generator (4). In this embodiment, the generator (4) may be embedded in the control unit (9). In this embodiment, the generator (4) may be a hardware generator (4), as well as a software generator (4) integrated in a software regulating the operation of the control unit (9). In this embodiment, the timer may be a hardware timer, as well as a software timer integrated in a software regulating the operation of the control unit (9).

In an embodiment of the invention, the refrigerator (1) of the invention comprises a display enabling transmitting to a user whether ultrasonic waves are being generated, or the remaining generation duration. A user can start or stop the generation of ultrasonic waves by means of the button (8) according to information he/she receives through said display.

In an embodiment of the invention, the generator (4) can determine the waveform of the ultrasonic waves desired to be generated. For example, the generator (4) can enable the ultrasonic waves to be generated in the from of a square wave, triangular wave, sinus wave, and the like.

In an embodiment of the invention, at least one plate (6) is provided in the inner chamber (2), on which the items desired to be stored are placed, enabling the ultrasonic waves generated by the transducer (5) to be homogeneously distributed on said items.

In an embodiment of the invention, the refrigerator (1) of the invention comprises a sensor detecting opening and closing of the inner chamber (2) door (3). Thus, ultrasonic waves are enabled to be generated automatically upon closing of the door (3).

It is obvious that the refrigerator (1) of the invention uses electricity to operate. This energy can be generated by any electricity generation method of the state of the art or one that may be developed in the future.

## Claims

1. A refrigerator (1) extending the shelf-life of the food products placed therein, **comprising**
- at least one inner chamber (2) in which the items intended to be stored are placed, and
- at least one door (3) enabling closing the inner chamber (2),
- at least one generator (4) creating electric signals to enable generation of the ultrasonic waves intended to be transmitted to the inner chamber (2),
- at least one transducer (5) converting the electric signals generated by the generator (4) to ultrasonic waves **characterized by**
- at least one microphone (7) detecting ultrasonic waves and enabling measuring the amount of the ultrasonic waves transmitted to the inner chamber (2)

2. A refrigerator (1) according to claim 1, wherein the generator (4) is generating electric signals according to the frequency, power and duration of the ultrasonic waves desired to be generated.

3. A refrigerator (1) according to claim 1, **comprising** at least one button (8) enabling a user to start and stop generation of the ultrasonic waves.

4. A refrigerator (1) according to claim 3, **comprising** a timer enabling, upon pressing the button (8), the generator (4) to be activated for a given duration and to be stopped upon completion of said duration.

5. A refrigerator (1) according to claim 1, **comprising** a control unit (9) capable of determining the frequency, amplitude, waveform of the electric signal to be generated by the generator (4), and of controlling starting or stopping the operation of the generator (4).

6. A refrigerator (1) according to claim 1, **comprising** a control unit (9) capable of determining the amount of the ultrasonic waves detected by the microphone (7) by receiving data from the microphone (7), of comparing said amount with the amount of ultrasonic waves generated by means of the electric signals generated by the generator (4), and of deciding depending on said comparison, whether to continue or to stop ultrasonic wave generation.

7. A refrigerator (1) according to claim 3, **comprising** at least one control unit (9) capable of detecting the button (8) being pressed by a user, and of starting or stopping the operation of the generator (4) accordingly.

8. A refrigerator (1) according to claim 5, **comprising** a hardware generator (4) embedded in the control unit (9).

9. A refrigerator (1) according to claim 5, **comprising** a software generator (4) integrated in a software regulating the operation of the control unit (9).

10. A refrigerator (1) according to claim 5, **comprising** a hardware timer embedded in the control unit (9).

11. A refrigerator (1) according to claim 5, **comprising** a software timer integrated in a software regulating the operation of the control unit (9).

12. A refrigerator (1) according to claim 1, **comprising** a display enabling transmitting to a user, information about whether ultrasonic waves are being generated.

13. A refrigerator (1) according to claim 4, **comprising** a display enabling transmitting to a user, information about the remaining duration of ultrasonic wave generation.

14. A refrigerator (1) according to claim 1, wherein the generator (4) is capable of determining the waveform of the ultrasonic waves desired to be generated.

## Patentansprüche

1. Ein Kühlschrank (1), der die Haltbarkeit der darin platzierten Lebensmittelprodukte verlängert, **umfasst**
- mindestens einen Innenraum (2), in dem die zu lagernden Gegenstände angeordnet sind, und
- mindestens eine Tür (3), die das Verschließen des Innenraums (2) ermöglicht,
- mindestens einen Generator (4), der elektrische Signale erzeugt, um die Erzeugung von Ultraschallwellen zu ermöglichen, die dazu bestimmt sind, an die innere Kammer (2) übertragen zu werden,
- mindestens einen Wandler (5), der die vom Generator (4) erzeugten elektrischen Signale in Ultraschallwellen umwandelt, **gekennzeichnet ist es durch**
- mindestens ein Mikrofon (7), das Ultraschallwellen erfasst und eine Messung der Menge der Ultraschallwellen ermöglicht, die in den Innenraum (2) übertragen werden.

2. Ein Kühlschrank (1), wie in Anspruch 1 aufgeführt, wobei der Generator (4) elektrische Signale entsprechend der Frequenz, Leistung und Dauer der zu erzeugenden Ultraschallwellen erzeugt.

3. Ein Kühlschrank (1), wie in Anspruch 1 aufgeführt, **umfasst** mindestens eine Taste (8), die es einem Benutzer ermöglicht, die Erzeugung der Ultraschallwellen zu starten und zu stoppen.

4. Ein Kühlschrank (1), wie in Anspruch 3 aufgeführt, **umfasst** einen Timer, der es ermöglicht, beim Drücken des Knopfes (8) den Generator (4) für eine gegebene Dauer zu aktivieren und nach Ablauf dieser Dauer anzuhalten.

5. Ein Kühlschrank (1), wie in Anspruch 1 aufgeführt, **umfasst** eine Steuereinheit (9), die in der Lage ist, die Frequenz, Amplitude, Wellenform des durch den Generator (4) zu erzeugenden elektrischen Signals zu bestimmen und den Start oder Stopp des Betriebs des Generators (4) zu steuern.

6. Ein Kühlschrank (1), wie in Anspruch 1 aufgeführt, **umfasst** eine Steuereinheit (9), die in der Lage ist, die Menge der vom Mikrofon (7) erfassten Ultraschallwellen durch Empfangen von Daten vom Mikrofon (7) zu bestimmen, die Menge mit der Menge der mittels der erzeugten elektrischen Signale erzeugten Ultraschallwellen vom Generator (4) zu vergleichen, und abhängig von dem Vergleich zu entscheiden, ob die Ultraschallwellenerzeugung fortgesetzt oder gestoppt werden soll.

7. Ein Kühlschrank (1), wie in Anspruch 3 aufgeführt, **umfasst** mindestens eine Steuereinheit (9), die in der Lage ist, das Drücken des Knopfes (8) durch einen Benutzer zu erfassen und den Betrieb des Generators (4) entsprechend zu starten oder zu stoppen.

8. Ein Kühlschrank (1), wie in Anspruch 5 aufgeführt, **umfasst** einen Hardware-Generator (4), der in die Steuereinheit (9) eingebettet ist.

9. Ein Kühlschrank (1), wie in Anspruch 5 aufgeführt, **umfasst** einen Softwaregenerator (4), der in eine Software integriert ist, die den Betrieb der Steuereinheit (9) regelt.

10. Ein Kühlschrank (1), wie in Anspruch 5 aufgeführt, **umfasst** einen Hardware-Timer, der in die Steuereinheit (9) eingebettet ist.

11. Ein Kühlschrank (1), wie in Anspruch 5 aufgeführt, **umfasst** einen Software-Timer, der in eine Software integriert ist, die den Betrieb der Steuereinheit (9) regelt.

12. Ein Kühlschrank (1), wie in Anspruch 1 aufgeführt, **umfasst** eine Anzeige, die es ermöglicht, Informationen darüber, ob Ultraschallwellen erzeugt werden, an einen Benutzer zu übertragen.

13. Ein Kühlschrank (1), wie in Anspruch 4 aufgeführt, **umfasst** eine Anzeige, die es ermöglicht, Informationen über die verbleibende Dauer der Ultraschallwellenerzeugung an einen Benutzer zu übertragen.

14. Ein Kühlschrank (1), wie in Anspruch 1 aufgeführt, wobei der Generator (4) in der Lage ist, die Wellenform der zu erzeugenden Ultraschallwellen zu bestimmen.

## Revendications

1. Un réfrigérateur (1) prolongeant la durée de conservation des produits alimentaires qui y sont placés, **comprenant**
- au moins une chambre intérieure (2) dans laquelle sont placés les articles destinés à être stockés, et
- au moins une porte (3) permettant de fermer la chambre intérieure (2),
- au moins un générateur (4) créant des signaux électriques pour permettre la génération des ondes ultrasonores destinées à être transmises à la chambre intérieure (2),
- au moins un transducteur (5) convertissant les signaux électriques générés par le générateur (4) en ondes ultrasonores **caractérisées par**
- au moins un microphone (7) détectant les ondes ultrasonores et permettant de mesurer la quantité d'ondes ultrasonores transmises à la chambre intérieure (2)

2. Un réfrigérateur (1) selon la déclaration 1, dans lequel le générateur (4) génère des signaux électriques selon la fréquence, la puissance et la durée des ondes ultrasonores que l'on souhaite générer.

3. Un réfrigérateur (1) selon la déclaration 1, **comprenant** au moins un bouton (8) permettant à un utilisateur de démarrer et d'arrêter la génération des ondes ultrasonores.

4. Un réfrigérateur (1) selon la déclaration 3, **comprenant** une minuterie permettant, en appuyant sur le bouton (8), d'activer le générateur (4) pendant une durée donnée et de l'arrêter à la fin de ladite durée.

5. Un réfrigérateur (1) selon la déclaration 1, **comprenant** une unité de commande (9) capable de déterminer la fréquence, l'amplitude, la forme d'onde du signal électrique à générer par le générateur (4), et de commander le démarrage ou l'arrêt du fonctionnement du générateur (4).

6. Un réfrigérateur (1) selon la déclaration 1, **comprenant** une unité de commande (9) capable de déterminer la quantité d'ondes ultrasonores détectées par le microphone (7) en recevant des données du microphone (7), de comparer ladite quantité avec la quantité d'ondes ultrasonores générées au moyen des signaux électriques générés par le générateur (4), et de décider en fonction de ladite comparaison, de continuer ou d'arrêter la génération d'ondes ultrasonores.

7. Un réfrigérateur (1) selon la déclaration 3, **comprenant** au moins une unité de commande (9) capable de détecter que le bouton (8) est pressé par un utilisateur, et de démarrer ou d'arrêter le fonctionnement du générateur (4) en conséquence.

8. Un réfrigérateur (1) selon la déclaration 5, **comprenant** un générateur matériel (4) intégré dans l'unité de commande (9).

9. Un réfrigérateur (1) selon la déclaration 5, **comprenant** un générateur de logiciel (4) intégré dans un logiciel régulant le fonctionnement de l'unité de commande (9).

10. Un réfrigérateur (1) selon la déclaration 5, **comprenant** une minuterie matérielle intégrée dans l'unité de commande (9).

11. Un réfrigérateur (1) selon la déclaration 5, **comprenant** une minuterie logicielle intégrée dans un logiciel régulant le fonctionnement de l'unité de commande (9).

12. Un réfrigérateur (1) selon la déclaration 1, **comprenant** un affichage permettant de transmettre à un utilisateur, des informations sur le fait que des ondes ultrasoniques sont générées.

13. Un réfrigérateur (1) selon la déclaration 4, **comprenant** un affichage permettant de transmettre à un utilisateur, des informations sur la durée restante de la génération d'ondes ultrasonores.

14. Un réfrigérateur (1) selon la déclaration 1, dans lequel le générateur (4) est capable de déterminer la forme d'onde des ondes ultrasonores que l'on souhaite générer.
